# EUROPÄISCHE PATENTSCHRIFT

(11) **EP 2 052 032 B1**
(45) Veröffentlichungstag und Bekanntmachung des Hinweises auf die Patenterteilung: **01.06.2011**
(21) Anmeldenummer: 07787796.7
(22) Anmeldetag: 23.07.2007
(51) Int. Cl.: C08L 83/04, C08K 3/32, C08K 3/00, C08K 5/00, B41M 5/26

(54) **LASERBESCHRIFTBARES POLYMERMATERIAL**
LASER-WRITABLE POLYMER MATERIAL
MATIÈRE POLYMÈRE INSCRIPTIBLE AU LASER

(30) Priorität: 14.08.2006 DE 102006038043
(43) Veröffentlichungstag der Anmeldung: 29.04.2009
(73) Patentinhaber: Chemische Fabrik Budenheim KG, 55257 Budenheim (DE)
(72) Erfinder: SCHEUER, Gerhard, 55268 Nieder-Olm (DE); MARKMANN, Joachim, 55452 Dorsheim (DE); BÜHLER, Gunnar, 56645 Nickenich (DE); NÄGERL, Hans-Dieter, 67373 Dudenhofen (DE); FUTTERER, Thomas, 55218 Ingelheim (DE); WISSEMBORSKI, Rüdiger, 55435 Gau-Algesheim (DE)
(74) Vertreter: WSL Patentanwälte
(86) Internationale Anmeldenummer: PCT/EP2007/057551
(87) Internationale Veröffentlichungsnummer: WO 2008/019925

(56) Entgegenhaltungen:
- EP-A- 0 542 115
- WO-A-2005/090056
- WO-A-2006/042833
- DE-A1- 10 034 472

## Beschreibung

Die vorliegende Erfindung betrifft eine laserbeschriftbare Formmasse, die wenigstens ein Polymermaterial oder wenigstens eine zu einem Polymermaterial polymerisierbare Vorläuferverbindung und eine partikuläre salzartige Verbindung oder eine Mischung partikulärer salzartiger Verbindungen, die unter dem Einfluß von Laserlicht ihre Farbe ändert oder zu einer Farbveränderung in dem Polymermaterial führt, enthält. Weiterhin betrifft die Erfindung Formteile, die aus solchen laserbeschriftbaren Formmassen hergestellt sind.

### Stand der Technik

Seit längerer Zeit befaßt sich die Forschung mit der Entwicklung laserbeschriftbarer Kunststoffe, da Laserlicht zu sehr feinen Strahlen gebündelt werden kann, was man zur Erzeugung von Schrift und Bild auf Kunststoffgegenständen ausnutzen möchte. Die meisten Kunststoffe sind aber als solche nicht beschriftbar, da sie Laserlicht nicht absorbieren. Daher setzt man dem Kunststoff als Pigmente bezeichnete teilchenförmige, lichtsensitive Verbindungen zu, die unter dem Einfluß von Laserlicht zu einer lokalen Farbveränderung führen. Diese Farbveränderung kann daraus resultieren, daß das Pigment selbst unter Absorption von Laserlicht seine Farbe durch chemische Reaktion, Zersetzung oder physikalischen Übergang in eine andere Modifikation verändert oder aber daß die von dem Pigment absorbierte Lichtenergie auf den benachbarten Kunststoff übertragen wird und diesen zersetzt oder anderweitig zu einem Farbumschlag veranlasst.

Die in der Vergangenheit zu diesem Zweck untersuchten und beschriebenen Pigmente sind vielfältig, wie beispielsweise verschiedenste Metalloxide, Metallphosphate, Metallstannate und Metallsalze organischer Anionen.

Aus der EP-A-190,997 ist ein Verfahren zur Lasermarkierung bekannt, bei dem unter anderem Titanoxid und Antimonoxid als Pigmente in ein Polymermaterial eingearbeitet werden. Aus der EP-A-330,869 ist der Einsatz von Titanoxid-Weißpigment bekannt. Die EP-A-400,305 und die EP-A-542,115 beschreiben die Verwendung von Kupferhydroxidphosphat bzw. von Molybdän-(IV)-oxid als Laserpigmente. In der US-A-5,063,137 wird unter anderem die Verwendung von wasserfreien Metallphosphaten und Phosphorsäure-basierenden Gläsern offenbart. Die EP-A-797,511 beschreibt den Einsatz von plättchenförmigen Pigmenten mit einer Schicht aus dotiertem Zinnoxid.In der US-A-5,489,639 wird der Einsatz ausgewählter Kupfersalze (Phosphate, Sulfate, Thiocyanate) beschrieben. Die EP-A-764,683 offenbart die Verwendung von Kupferpyrophosphat-Hydrat und/oder Mangansulfathydrat als Pigmente. Aus der EP-A-808,866 ist der Einsatz von Borsäureanhydrid bekannt. Die WO-A-98/58805 offenbart eine Reihe von Kupfer-phosphaten als Laserpigmente. Die WO-A-99/55773 beschreibt unter anderem die Verwendung von Zinkhydroxystannat und Zinn(II)-Oxalat. Aus der DE-A-199 05 358 ist die Verwendung von Alkalikupferdiphosphat bekannt. Die WO-A-01/00719 beschreibt den Einsatz von Antimonoxid mit Teilchengrößen oberhalb von 0,5 µm. Aus der EP-A-1,190,988 ist die Verwendung von bestimmten Wismut-Mischoxiden bekannt. In der WO-A-01/78994 wird der Einsatz von Kupferfumarat, Kupfermaleat sowie deren Mischungen vorgeschlagen. In der DE-A-100 53 639 wird die Verwendung ausgewählter Salze, unter anderem verschiedener Kobalt- und Eisenphosphate, vorgeschlagen. Die DE-A-100 34 472 beschreibt die Verwendung von mit bestimmten Siliziumverbindungen oberflächenmodifizierten Teilchen. In der EP-A-753,536 wird der Einsatz von mindestens zwei Arten von Metalloxiden beschrieben. Die EP-A-105,451 beschreibt Polyphenylensulfid-Formmassen, die zur Lasermarkierung mit ausgewählten Zusätzen, beispielsweise mit der Kombination von Bleichromat und Bleimolybdat, mit Nickel-Antimon-Titanat oder mit Kobalt-Zink-Silizium modifiziert worden sind. Aus der DE 102004050481 ist die Verwendung von Zinnphosphat als Pigment zur Laserbeschriftung bekannt. Die DE 102004050480 beschreibt die Verwendung einer salzartigen Verbindung mit wenigstens zwei verschiedenen Metallkationen als Laserpigment. Die DE 102004050571 beschreibt die Verwendung einer salzartigen Verbindung oder einer Mischung salzartiger Verbindungen, die wenigstens Zinn als zweiwertiges Kation und gegebenenfalls weitere Kationen und Oxoanionen, Anionen von organischen Carbonsäuren oder Anionen der Kohlensäure enthält.

Als Kunststoffe für die Laserbeschriftung werden bislang hauptsächlich Thermoplaste eingesetzt, wie Polyethylen, Polypropylen, Polypropylen-Polyethylen-Copolymere, Polyamid, Polyester, Polyphenylenoxid, Polyacetal, Polyethylenterephthalat, Polybutylenterephthalat, Polymethacrylat, Polyoxymethylen, Polyvinylacetal, Polystyrol, Acryl-Butadien-Styrol, Acrylnitril-Styrol-Acrylester, Polycarbonat, Polyethersulfon, Polyethyletherketon, Polyvinylchlorid und thermoplastisches Polyurethan. Neben ihren vorteilhaften mechanischen, thermischen, elektrischen und chemischen Eigenschaften eignen sich die Thermoplaste auch gut für die Einarbeitung von Pigmenten zur Laserbeschriftung. Anwendungsbeispiele sind Anwendungen im Haushaltswarenbereich, bei Tastaturen und im Elektronikbereich, wie es etwa in der EP-A-027,532 beschrieben ist.

Hinsichtlich der Beschriftbarkeit von Duroplasten und Elastomeren mittels Laserlicht ist bislang wenig bekannt. Die Beschriftung von thermostabilen Harzen, wie beispielsweise Phenolharzen, Epoxydharzen und anderen duroplastischen Materialien, wird bisher mit herkömmlichen Druckverfahren realisiert, wie Ink-Jet-Bedruckung, Siebdruck, Tampondruck usw. Bei der Beschriftung von Silikonummantelungen von Kabeln wird üblicherweise die Ink-Jet-Technologie verwendet. Die herkömmlichen Druckverfahren haben den Nachteil, daß der Aufdruck nicht permanent ist und durch Feuchtigkeit, Lösungsmittel oder Abrieb leicht entfernt wird.

### Aufgabe

Die Aufgabe der vorliegenden Erfindung bestand in der Bereitstellung neuer laserbeschriftbarer Formmassen und der Erweiterung des bisher für die Laserbeschriftung zur Verfügung stehenden Spektrums an Matrixmaterialien sowie der Überwindung der Nachteile der bisher eingesetzten Beschriftungen solcher Matrixmaterialien.

### Lösung

Dies Aufgabe wird gelöst durch eine laserbeschriftbare Formmasse enthaltend
A) wenigstens ein Polymermaterial oder wenigstens eine zu einem Polymermaterial polymerisierbare Vorläuferverbindung,
B) eine partikuläre salzartige Verbindung oder eine Mischung partikulärer salzartiger Verbindungen, die unter dem Einfluß von Laserlicht ihre Farbe ändert oder zu einer Farbveränderung in der Komponente A) führt,
   wobei das wenigstens eine Polymermaterial der Komponente A) unter Polymerverbindungen mit Siloxan-Verknüpfungseinheiten ausgewählt ist.

In einer bevorzugten Ausführungsform der Erfindung ist das wenigstens eine Polymermaterial der Komponente A) unter Silikonen, Silikonkautschuken, Silikonharzen, mit Silikon modifizierten Duroplasten, mit Silikon modifizierten Elastomeren, Siloxan-Verknüpfungseinheiten enthaltenden Copolymeren und Mischpolymeren und Gemischen der vorgenannten mit anderen Polymermaterialien ausgewählt.

Ganz besonders bevorzugt ist das wenigstens eine Polymermaterial der Komponente A) unter Silikonen, Silikonkautschuken und Silikonharzen ausgewählt.

In einer weiteren bevorzugten Ausführungsform der Erfindung beträgt der Gewichtsanteil von Komponente A) 40 bis 99,95 Gew.-%, bevorzugt 80 bis 99,5 Gew.-%, besonders bevorzugt 95 - 99 Gew.-%, bezogen auf die Gesamtmasse der Formmasse.

In einer weiteren bevorzugten Ausführungsform der Erfindung ist die salzartige Verbindung oder sind die salzartigen Verbindungen der Komponente B) unter Metallphosphaten und/oder Metallphosphiten ausgewählt.

In einer weiteren bevorzugten Ausführungsform der Erfindung ist die salzartige Verbindung oder sind die salzartigen Verbindungen der Komponente B) unter Orthophosphaten, Polyphosphaten, Pyrophosphaten und Hydroxidphosphaten ausgewählt.

In einer weiteren bevorzugten Ausführungsform der Erfindung ist die salzartige Verbindung oder sind die salzartigen Verbindungen der Komponente B) unter Kupfer-Phosphaten, Zinn-Phosphaten, Eisen-Phosphaten, Nickel-Phosphaten, Molybdän-Phosphaten, Kobalt-Phosphaten, Mangan-Phosphaten und Antimon-Phosphaten und besonders bevorzugt unter Kupfer-Phosphaten, Zinn-Phosphaten und Eisen-Phosphaten ausgewählt.

In einer weiteren bevorzugten Ausführungsform der Erfindung ist die salzartige Verbindung oder umfassen die salzartigen Verbindungen der Komponente B) Kupfer-Hydroxidphosphat [KHP; Cu₄(OH)₂(PO₄)₂].

In einer weiteren bevorzugten Ausführungsform der Erfindung ist die salzartige Verbindung oder sind die salzartigen Verbindungen der Komponente B) in einer Menge von 0,01 bis 10 Gew.-%, vorzugsweise 0,1 bis 5 Gew.-%, besonders bevorzugt 0,3 bis 2 Gew.-%, bezogen auf die Gesamtmasse der Formmasse, enthalten.

In einer weiteren bevorzugten Ausführungsform der Erfindung hat die salzartige Verbindung oder haben die salzartigen Verbindungen der Komponente B) eine mittlere Teilchengröße (D50) von weniger als 50 µm, vorzugsweise weniger als 15 µm, besonders bevorzugt von weniger als 10 µm.

In einer weiteren bevorzugten Ausführungsform der Erfindung enthält die Formmasse als eine Komponente C) weitere übliche Additive.

Besonders bevorzugt enthält die Formmasse als eine Komponente C) wenigstens eines der folgenden Additive: Stabilisatoren zur Verbesserung der Beständigkeit gegen Lichteinwirkung, UV-Strahlung und Bewitterung, Stabilisatoren zur Verbesserung der thermischen und thermooxidativen Beständigkeit, Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und/oder Weichmacher.

Die Erfindung umfaßt auch ein Formteil, das durch Formgebung einer lasermarkierbaren Formmasse gemäß dieser Erfindung erhältlich ist.

Die Erfindung umfaßt weiterhin ein lasermarkiertes Formteil, das durch Bestrahlen eines Formteils aus einer lasermarkierbaren Formmasse gemäß dieser Erfindung mit Laserlicht erhältlich ist.

Die Erfindung umfaßt weiterhin die Verwendung wenigstens eines Polymermaterials oder wenigstens einer zu einem Polymermaterial polymerisierbaren Vorläuferverbindung gemäß der erfindungsgemäßen Definition der Komponente A) zur Herstellung einer laserbeschriftbaren Formmasse.

Die Erfindung umfaßt weiterhin die Verwendung einer partikulären salzartigen Verbindung oder einer Mischung partikulärer salzartiger Verbindungen gemäß der erfindungsgemäßen Definition der Komponente B) zur Herstellung einer laserbeschriftbaren Formmasse.

Die Auswahl der Komponente B) erfolgt in der Regel so, daß diese im Wellenlängenbereich des zur Verfügung stehenden Laserlichtes eine möglichst starke Absorption aufweist. Die Wellenlängenbereiche des eingesetzten Laserlichtes sind grundsätzlich keinen Beschränkungen unterworfen. Geeignete Laser haben im allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und NdYAG-Laser (1064 nm) oder gepulste UV-Laser erwähnt. Typische Excimerlaser weisen folgende Wellenlängen auf: F2-Excimerlaser (157 nm), ArF-Excimerlaser(193 nm), KrCl-Excimerlaser (222 nm), KrF-Excimerlaser (248 nm), XeCl-Excimer-laser (308 nm), XeF-Excimerlaser (351 nm), frequenzvervielfachte NdYAG-Laser mit Wellenlängen von 532 nm (frequenzverdoppelt), 355 nm (frequenzverdreifacht) oder 265 nm (frequenzvervierfacht). Besonders bevorzugt werden NdYAG-Laser (1064 bzw. 532 nm) und CO₂-Laser eingesetzt.

Die Energiedichten der erfindungsgemäss eingesetzten Laser liegen im allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im allgemeinen im Bereich von 1 bis 30 kHz.

Unter einer "salzartigen Verbindung" versteht man hier im Sinne der Erfindung Verbindungen, die in Wasser wenigstens teilweise in Kationen und Anionen dissoziieren bzw. aus einem Säurerest und einem Basenrest bestehen.

Der Begriff "partikulär" oder "teilchenförmig" im Zusammenhang mit einer salzartigen Verbindung soll bedeuten, daß die Verbindung in Form feiner fester Teilchen vorliegt.

Die "Teilchengröße" wird für die Zwecke dieser Erfindung durch übliche Methoden wie Lichtstreuung, Mikroskopie bzw. Elektronenmikroskopie, zählende Flußmessungen an dünnen Spalten, Sedimentationsverfahren oder weiteren kommerziell erhältlichen Verfahren bestimmt. Quantitative Angaben beziehen sich auf die mittlere Teilchengröße (D50). Die Größe der Primärteilchen liegt im Nanometer- bis Mikrometerbereich.

Laserbeschriftbare Formmassen im Sinne dieser Anmeldung zeichnen sich dadurch aus, daß bei Einstrahlung von intensivem Licht, bevorzugt aus einer üblichen Laserlichtquelle, an der belichteten Stelle eine Farbveränderung im Vergleich zur nicht belichteten Matrix auftritt. Dieser Farbunterschied kann als lokal unterschiedliche Leuchtdichte, als lokal unterschiedliche Farbwerte z.B. im CIELab-System oder als lokal unterschiedliche Farbwerte im RGB System erfaßt werden. Diese Effekte können bei unterschiedlichen Lichtquellen auftreten.

Wenn hierin von einer "Farbveränderung" die Rede ist, kann diese ein Umschlagen von einem Farbton in einen anderen, wie beispielsweise von Gelb nach Rot oder von Transparent nach Schwarz sein. Im Sinne der Erfindung soll unter diesem Begriff aber auch eine Helligkeitsveränderung, beispielsweise von Hellbraun nach Dunkelbraun und/oder eine Farbänderung im Kunststoff verstanden werden.

### Duroplaste

Während die Thermoplaste keine Vernetzungsstellen aufweisen und daher aufschmelzbar sind, können Elastomere und Duroplaste aufgrund ihrer Vernetzung nicht aufgeschmolzen werden und zerfallen nach Überschreiten der Zersetzungstemperatur (Pyrolyse). Duroplaste sind Kunststoffe, die nach ihrer Aushärtung nicht mehr verformt werden können. Es handelt sich um harte, glasartige Polymerwerkstoffe, die über chemische Hauptvalenzbindungen dreidimensional fest vernetzt sind. Im Unterschied zu Elastomeren sind Duroplaste wesentlich stärker vernetzt, was in ihrem Herstellungsprozess durch Polykondensation und Polyaddition begründet liegt.

### Silikone

Silikone sind eine Gruppe synthetischer Polymere, bei denen Siliziumatome über Sauerstoffatome (Siloxaneinheiten) zu Molekülketten und/oder netzartig verknüpft sind. Aufgrund ihres typisch anorganischen Gerüstes einerseits und ihrer organischen Resten andererseits nehmen Silikone eine Zwischenstellung zwischen anorganischen und organischen Verbindungen ein, insbesondere zwischen Silikaten und organischen Polymeren. Sie sind in gewisser Weise Hybride und weisen ein einzigartiges Eigenschaftsspektrum auf, das von keinem anderen Kunststoff erreicht wird.

Silikonkautschuke und Silikongummi weisen allgemein eine Dichte von 1,1 bis 1,3 g/cm³ auf und sind von -60°C bis 200°C (Spezialtypen von -90°C bis 250°C) elastisch. Es handelt sich um in den gummielastischen Zustand überführbare Massen, welche als Grundpolymere Polydiorganosiloxane enthalten, die Vernetzungsreaktionen zugängliche Gruppen aufweisen. Als solche kommen vorwiegend Wasserstoffatome, Hydroxylgruppen und Vinylgruppen in Frage, die sich an den Kettenenden befinden, aber auch in die Kette eingebaut sein können. In dieses System sind Füllstoffe als Verstärker eingearbeitet, deren Art und Menge das mechanische und chemische Verhalten der Vulkanisate deutlich beeinflussen. Silikonkautschuk und Silikongummi können durch anorganische Pigmente gefärbt werden.

Man unterscheidet zwischen heiß- und kaltvulkanisierenden Silikonkautschuken (engl.: high/room temperature vulcanizing = HTV/RTV). Die HTV-Silikonkautschuke stellen meist plastisch verformbare, eben noch fließfähige Materialien dar, welche hochdisperse Kieselsäure sowie als Vernetzungskatalysatoren organische Peroxide enthalten und nach Vulkanisation bei Temperaturen größer 100°C wärmebeständige, zwischen -100°C und +250°C elastische Silikonelastomere (Silikongummi) ergeben, die z.B. als Dichtungs-, Dämpfungs-, Elektroisoliermaterialien, Kabelummantelungen und dergleichen verwendet werden.

Ein anderer Vernetzungsmechanismus besteht in einer meist durch Edelmetallverbindungen katalysierten Addition von Si-H-Gruppen an siliziumgebundene Vinylgruppen, die beide in die Polymerketten bzw. an deren Ende eingebaut sind. Seit 1980 hat sich eine Flüssigkautschuk-Technologie (LSR = Liquid Silikone Rubber) etabliert, bei der zwei flüssige Silikonkautschukkomponenten über Additionsvernetzung in Spritzgießautomaten vulkanisiert werden. Bei den kalthärtenden oder RTV-Silikonkautschukmassen lassen sich Ein- und Zweikomponentensysteme unterscheiden. Die erste Gruppe (RTV-1) polymerisiert langsam bei Raumtemperatur unter dem Einfluß von Luftfeuchtigkeit, wobei die Vernetzung durch Kondensation von SiOH-Gruppen unter Bildung von Si-O-Bindungen erfolgt. Die SiOH-Gruppen werden durch Hydrolyse von SiX-Gruppen, einer intermediär aus einem Polymer mit endständigen OH-Gruppen und einem sogenannten Vernetzer R-SiX3 (X=-O-CO-CH3, -NHR) entstehenden Spezies, gebildet. Bei Zweikomponentenkautschuken (RTV-2) werden als Vernetzer z.B. Gemische aus Kieselsäureestern (z.B. Ethylsilicat) und zinnorganische Verbindungen verwendet, wobei als Vernetzungsreaktion die Bildung einer Si-O-Si-Brücke aus Si-OR und Si-OH durch Alkoholabspaltung erfolgt.

Silikonharze sind vernetzte Polymethylsiloxane oder Polymethylphenylsiloxane, deren Elastizität und Wärmebeständigkeit mit dem Gehalt an Phenylgruppen steigt. Reine Methylsilikonharze sind relativ spröde und mäßig wärmebeständig. Die Dauerwärmebeständigkeit von Silikonharzen ist hoch (180-200°C), die günstigen dielektrischen Werte sind bis 300°C weitgehend temperaturunabhängig. Ein Methylphenylsilikonharz kann 10.000 Stunden, ein Epoxid- oder Alkydharz dagegen nur wenige Stunden bei 200° beansprucht werden.

Silikonharze gelangen gewöhnlich in vorkondensierter Form in den Handel. Zum Teil werden sie auch mit organischen Harzen, z.B. Alkyd- und Polyesterharzen kombiniert. Als Silikonkombinationsharze bezeichnet man auch Copolymerisate aus niedermolekularen, hydroxyfunktionellen Silikonen mit Polyestern, Alkyd- und Acrylharzen, die zu sogenannten Silikonemail, einer dekorativen, hitzebeständigen Beschichtung; verarbeitet werden. Zur Erzeugung von Preßmassen und Laminaten werden Silikonharze mit geeigneten Füllstoffen wie Glasfasern, Quarzmehl, Glimmer usw., ggf. auch Farbpigmenten abgemischt. Da Silikonharze generell mit Hilfe von Kondensationskatalysatoren und bei erhöhter Temperatur kondensiert (gehärtet) werden müssen, kann man sie den Einbrennharzen zuordnen. Bei Temperaturen zwischen 250°C und 600°C zersetzt sich das Silikonharz unter Bildung von Kieselsäure. Diese gibt ggf. mit den beigemischten Pigmenten einen beständigen, korrosionsschützenden Oberflächenfilm.

Weitere Vorteile, Merkmale und Ausführungsformen der Erfindung werden anhand der nachfolgenden Beispiele erläutert.

### Beispiele

### Beispiel 1

100 g einer selbsthärtenden Silikonmasse (KE-541 U der Firma Shin-Etsu Silicones of America Inc., Akron, Ohio, USA) wurden mit 1 Gew.% Härter (Varox DBPH-50, C.H. Erbslöh, Krefeld, DE) und 1 Gew.-% Kupferhydroxidphosphat vermischt. Anschließend wurde die Masse bei 170 °C für 15 min. ausgehärtet. Die ausgehärtete Formmasse wurde mit einem NdYAG-Laser (Modell Magic Marker, ACl Laser GmbH, Sömmerda, DE) mit einer Wellenlänge von 1064 nm beschriftet. Die Formmasse war opak und die Beschriftung dunkelbraun/schwarz und zeigte einen guten Kontrast, ohne die Eigenfarbe der Matrix wesentlich zu verändern. Die Schrift befand sich in und unter der Oberfläche der Silikonmatrix und war absolut abriebfest und beständig gegen Chemikalieneinflüsse.

### Beispiel 2

300 g einer selbsthärtenden Silikonmasse (KE-541 U der Firma Shin-Etsu Silicones of America Inc., Akron, Ohio, USA) wurden mit 2 Gew.-% eines Gemisches aus gleichen Teilen Kupferhydroxidphosphat und Trizinnphosphat vermischt. Anschließend wurde die Masse bei 170 °C für 15 min. ausgehärtet. Die ausgehärtete Formmasse wurde mit einem NdYAG-Laser (Modell Magic Marker, ACI Laser GmbH, Sömmerda, DE) mit einer Wellenlänge von 1064 nm beschriftet. Die Formmasse war opak und die Beschriftung dunkelbraun und zeigte einen sehr guten Kontrast, ohne die Eigenfarbe der Matrix wesentlich zu verändern. Die Schrift befand sich in und unter der Oberfläche der Silikonmatrix und war absolut abriebfest und beständig gegen Chemikalieneinflüsse.

### Beispiel 3

100 g einer selbsthärtenden Silikonmasse (KE-541 U der Firma Shin-Etsu Silicones of America Inc., Akron, Ohio, USA) wurden mit 1 Gew.% Härter (Varox DBPH-50, C.H. Erbslöh, Krefeld, DE) und 1 Gew.-% Trizinnphosphat vermischt. Anschließend wurde die Masse bei 170 °C für 15 min. ausgehärtet. Die ausgehärtete Formmasse wurde mit einem NdYAG-Laser (Modell Magic Marker, ACl Laser GmbH, Sömmerda, DE) mit einer Wellenlänge von 1064 nm beschriftet. Die Formmasse war opak und die Beschriftung dunkelbraun/schwarz und zeigte einen ausreichenden Kontrast, ohne die Eigenfarbe der Matrix wesentlich zu verändern. Die Schrift befand sich in und unter der Oberfläche der Silikonmatrix und war absolut abriebfest und beständig gegen Chemikalieneinflüsse.

## Patentansprüche

1. Laserbeschriftbare Formmasse enthaltend A) wenigstens ein Polymermaterial mit Siloxan-Verknüpfungseinheiten, ausgewählt unter Silikonen, Silikonkautschuken, Silikonharzen, mit Silikon modifizierten Duroplasten, mit Silikon modifizierten Elastomeren, Siloxan-Verknüpfungseinheiten enthaltenden Copolymeren und Mischpolymeren und Gemischen der vorgenannten mit anderen Polymermaterialien, und B) eine partikuläre salzatigen Verbindung oder eine Mischung partikulärer salzartiger Verbindungen, die unter dem Einfluß von Laserlicht ihre Farbe ändert oder zu einer Farbveränderung in der Matrix aus wenigstens einem Polymermaterial führt und die in einer Menge von 0,3 bis 10 Gew.-% in dem Polymermaterial, bezogen auf die Gesamtmasse der Formmasse, enthalten ist.

2. Laserbeschriftbare Formmasse nach Anspruch 1, **dadurch gekennzeichnet, daß** das wenigstens eine Polymermaterial der Komponente A) unter Silikonen, Silikonkautschuken und Silikonharzen ausgewählt ist

3. Laserbeschriftbare Formmasse nach einem der vorangegangenen Ansprüche, **dadurch gekennzeichnet, daß** der Gewichtsanteil von Komponente A) 40 bis 99,95 Gew.-%, bezogen auf die Gesamtmasse der Formmasse, beträgt.

4. Laserbeschriftbare Formmasse nach einem der vorangegangenen Ansprüche, **dadurch gekennzeichnet, daß** die salzartige Verbindung oder die salzartigen Verbindungen der Komponente B) unter Metallphosphaten und/oder Metallphosphiten ausgewählt ist/sind.

5. Laserbeschriftbare Formmasse nach einem der vorangegangenen Ansprüche, **dadurch gekennzeichnet, daß** die salzartige Verbindung oder die salzartigen Verbindungen der Komponente B) unter Orthophosphaten, Polyphosphaten, Pyrophosphaten und Hydroxidphosphaten ausgewählt ist/sind.

6. Laserbeschriftbare Formmasse nach einem der vorangegangenen Ansprüche, **dadurch gekennzeichnet, daß** die salzartige Verbindung oder die salzartigen Verbindungen der Komponente B) unter Kupfer-Phosphaten, Zinn-Phosphaten, Eisen-Phosphaten, Nickel-Phosphaten, Molybdän-Phosphaten, Kobalt-Phosphaten, Mangan-Phosphaten und Antimon-Phosphaten und besonders bevorzugt unter Kupfer-Phosphaten, Zinn-Phosphaten und Eisen-Phosphaten ausgewählt ist/sind.

7. Laserbeschriftbare Formmasse nach einem der vorangegangenen Ansprüche, **dadurch gekennzeichnet, daß** die salzartige Verbindung oder die salzartigen Verbindungen der Komponente B) Kupfer-Hydroxidphosphat [KHP; Cu₄(OH)₂(PO₄)₂] ist/umfassen.

8. Laserbeschriftbare Formmasse nach einem der vorangegangenen Ansprüche, **dadurch gekennzeichnet, daß** die salzartige Verbindung oder die salzartigen Verbindungen der Komponente B) in einer Menge von 0,3 bis 5 Gew.-%, besonders bevorzugt 0,3 bis 2 Gew.-%, bezogen auf die Gesamtmasse der Formmasse, enthalten ist/sind.

9. Laserbeschriftbare Formmasse nach einem der vorangegangenen Ansprüche, **dadurch gekennzeichnet, daß** die salzartige Verbindung oder die salzartigen Verbindungen der Komponente B) eine mittlere Teilchengröße (D50) von weniger als 50 µm, vorzugsweise weniger als 15 µm, besonders bevorzugt von weniger als 10 µm hat/haben.

10. Laserbeschriftbare Formmasse nach einem der vorangegangenen Ansprüche, **dadurch gekennzeichnet, daß** sie als Komponente C) wenigstens eines der folgenden Additive enthält: Stabilisatoren zur Verbesserung der Beständigkeit gegen Lichteinwirkung, UV-Strahlung und Bewitterung, Stabilisatoren zur Verbesserung der thermischen und thermooxidativen Beständigkeit, Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und/oder Weichmacher.

11. Formteil erhältlich durch Formgebung einer lasermarkierbaren Formmasse nach einem der Ansprüche 1 bis 10.

12. Lasermarkiertes Formteil erhältlich durch Bestrahlen eines Formteils aus einer lasermarkierbaren Formmasse nach einem der Ansprüche 1 bis 10 mit Laserlicht.

13. Verwendung wenigstens eines Polymermaterials oder wenigstens einer zu einem Polymermaterlal polymerisierbare Vorläuferverbindung gemäß der Definition der Komponente A) nach einem der Ansprüche 1 bis 10 zur Herstellung einer laserbeschriftbaren Formmasse.

14. Verwendung einer partikulären salzartigen Verbindung oder einer Mischung partikulärer salzartiger Verbindungen gemäß der Definition der Komponente B) nach einem der Ansprüche 1 bis 10 zur Herstellung einer laserbeschriftbaren Formmasse.

## Claims

1. A laser-writable molding material containing
A) at least one polymer material having siloxane crosslinking units selected from silicones, silicone rubbers, silicone resins, silicone-modified thermosetting materials, silicone-modified elastomers, siloxane crosslinking units-bearing copolymers and mixed polymers and mixtures of the aforementioned with other polymer materials and
B) a particulate salt-like compound or a mixture of particulate salt-like compounds, which under the influence of laser light changes its color or leads to a color change in the matrix of at least one polymer material, and which is included in the polymer material in an amount of between 0.3 and 10% by weight, with respect to the total mass of the molding material.

2. A laser-writable molding material as set forth in claim 1 **characterised in that** the at least one polymer material of the component A) is selected from silicones, silicone rubbers and silicone resins.

3. A laser-writable molding material as set forth in one of the preceding claims **characterised in that** the proportion by weight of component A) is between 40 and 99.95% by weight with respect to the total mass of the molding material.

4. A laser-writable molding material as set forth in one of the preceding claims **characterised in that** the salt-like compound or compounds of the component B) is/are selected from metal phosphates and/or metal phosphites.

5. A laser-writable molding material as set forth in one of the preceding claims **characterised in that** the salt-like compound or compounds of the component B) is/are selected from orthophosphates, polyphosphates, pyrophosphates and hydroxyphosphates.

6. A laser-writable molding material as set forth in one of the preceding claims **characterised in that** the salt-like compound or compounds of the component B) is/are selected from copper phosphates, tin phosphates, iron phosphates, nickel phosphates, molybdenum phosphates, cobalt phosphates, manganese phosphates and antimony phosphates and particularly preferably from copper phosphates, tin phosphates and iron phosphates.

7. A laser-writable molding material as set forth in one of the preceding claims **characterised in that** the salt-like compound or compounds of the component B) is/include copper hydroxyphosphate [CHP; Cu₄(OH)₂(PO₄)₂].

8. A laser-writable molding material as set forth in one of the preceding claims **characterised in that** the salt-like compound or compounds of the component B) is/are included in an amount of between preferably between 0.3 and 5% by weight, particularly preferably between 0.3 and 2% by weight, with respect to the total mass of the molding material.

9. A laser-writable molding material as set forth in one of the preceding claims **characterised in that** the salt-like compound or compounds of the component B) has/have a mean particle size (D50) of less than 50 µm, preferably less than 15 µm, particularly preferably less than 10 µm.

10. A laser-writable molding material as set forth in one of the preceding claims **characterised in that** component C) contains at least one of the following additives: stabilisers for improving the resistance to the action of light, UV radiation and weathering, stabilisers for improving thermal and thermo-oxidative resistance, stabilisers for improving hydrolytic resistance, stabilisers for improving acidolytic resistance, lubricants, mold removal aids, coloring additives, crystallisation-regulating substances and nucleation agents, flame-proofing agents, impact toughness modifiers, fillers and/or plasticisers.

11. A molding which can be obtained by shaping of a laser-markable molding material as set forth in one of claims 1 through 10.

12. A laser-marked molding which can be obtained by irradiating a molding comprising a laser-markable molding material as set forth in one of claims 1 through 10 with laser light.

13. Use of at least one polymer material or at least one precursor compound which can be polymerised to give a polymer material in accordance with the definition of the component A) as set forth in one of claims 1 through 10 for the production of a laser-writable molding material.

14. Use of a particulate salt-like compound or a mixture of particulate salt-like compounds in accordance with the definition of component B) as set forth in one of claims 1 through 10 for the production of a laser-writable molding material.

## Revendications

1. Matière de moulage inscriptible par laser contenant A) au moins une matière polymère comprenant des unités de réticulation du siloxane, choisies parmi les silicones, les caoutchoucs siliconés, les résines siliconées, des duroplastes modifiés par du silicone, des élastomères modifiés par du silicone, des copolymères contenant des unités de réticulation du siloxane et des mélanges de ceux-ci avec d'autres matières polymères, et B) un composé salin particulaire ou un mélange de composés salins particulaires qui modifie sa couleur sous l'influence de la lumière laser et qui conduit à une altération de la couleur dans la matrice constituée d'au moins une matière polymère et qui est contenu dans une quantité allant de 0,3% à 10% en poids dans la matière polymère, rapportée à la masse totale de la matière de moulage.

2. Matière de moulage inscriptible par laser selon la revendication 1, **caractérisée en ce que** l'au moins une matière polymère du constituant A) est choisie parmi les silicones, les caoutchoucs siliconés et les résines siliconées.

3. Matière de moulage inscriptible par laser selon l'une des revendications précédentes, **caractérisée en ce que** le pourcentage en poids du constituant A) est de 40% à 99,95% en poids, rapporté à la masse totale de la matière de moulage.

4. Matière de moulage inscriptible par laser selon l'une des revendications précédentes, **caractérisée en ce que** le composé salin ou les composés salins du constituant B) sont choisis parmi les phosphates métalliques et/ou les phosphites métalliques.

5. Matière de moulage inscriptible par laser selon l'une des revendications précédentes, **caractérisée en ce que** le composé salin ou les composés salins du constituant B) sont choisis parmi les orthophosphates, les polyphosphates, les pyrophosphates et les phosphates d'hydroxydes.

6. Matière de moulage inscriptible par laser selon l'une des revendications précédentes, **caractérisée en ce que** le composé salin ou les composés salins du constituant B) sont choisis parmi les phosphates de cuivre, les phosphates d'étain, les phosphates de fer, les phosphates de nickel, les phosphates de molybdène, les phosphates de cobalt, les phosphates de manganèse et les phosphates d'antimoine et de façon particulièrement préférée parmi les phosphates de cuivre, les phosphates d'étain et les phosphates de fer.

7. Matière de moulage inscriptible par laser selon l'une des revendications précédentes, **caractérisée en ce que** le composé salin ou les composés salins du constituant B) comportent du phosphate d'hydroxyde cuprique [KHP : Cu₄(OH)₂(PO₄)₂].

8. Matière de moulage inscriptible par laser selon l'une des revendications précédentes, **caractérisée en ce que** le composé salin ou les composés salins du constituant B) sont contenus dans la quantité allant de 0,3% à 5% en poids, de façon particulièrement préférée 0,3% à 2% en poids, rapportée à la masse totale de la matière de moulage.

9. Matière de moulage inscriptible par laser selon l'une des revendications précédentes, **caractérisée en ce que** le composé salin ou les composés salins du constituant B) ont une granularité moyenne (D50) de moins de 50 µm, avantageusement de moins de 15 µm, de façon plus particulièrement préférée de moins de 10 µm.

10. Matière de moulage inscriptible par laser selon l'une des revendications précédentes, **caractérisée en ce qu'**elle contient comme constituant C) au moins l'un des additifs suivants : des stabilisateurs pour améliorer la résistance à l'action de la lumière, au rayonnement UV et aux intempéries, des stabilisateurs pour améliorer la résistance thermique et thermooxydative, des stabilisateurs pour améliorer la résistance hydrolytique, des stabilisateurs pour améliorer la résistance acidolytique, des agents antifriction, des auxiliaires de démoulage, des additifs chromophores, des substances de régulation de la cristallisation et des agents de nucléation, des agents anti-flamme, des modificateurs de résilience, des matières de remplissage et/ou des plastifiants.

11. Pièce moulée obtenue par moulage d'une matière de moulage inscriptible par laser selon l'une des revendications 1 à 10.

12. Pièce moulée marquée par laser obtenue en irradiant avec de la lumière laser une pièce moulée à partir d'une matière de moulage inscriptible par laser selon l'une des revendications 1 à 10.

13. Utilisation d'au moins une matière polymère ou d'au moins un composé précurseur polymérisable dont une matière polymère suivant la définition du constituant A) selon l'une des revendications 1 à 10 pour fabriquer une matière de moulage inscriptible par laser.

14. Utilisation d'un composé salin particulaire ou d'un mélange de composés salins particulaires suivant la définition du constituant B) selon l'une des revendications 1 à 10 pour fabriquer une matière de moulage inscriptible par laser.
